# EUROPÄISCHE PATENTSCHRIFT

(11) **EP 1 787 926 B1**
(45) Veröffentlichungstag und Bekanntmachung des Hinweises auf die Patenterteilung: **21.01.2009**
(21) Anmeldenummer: 06022753.5
(22) Anmeldetag: 31.10.2006
(51) Int. Cl.: B65G 21/04

(54) **Stützvorrichtung einer Transportvorrichtung einer Lötanlage**
Support device for a conveyor of a soldering apparatus
Dispositif de support pour un convoyeur d'un appareil à braser

(30) Priorität: 18.11.2005 DE 202005018076 U
(43) Veröffentlichungstag der Anmeldung: 23.05.2007
(73) Patentinhaber: Seho Systemtechnik GmbH, 97892 Kreuzwertheim (DE)
(72) Erfinder: Ullrich, Rudolf, 97892 Kreuzwertheim (DE); Schlemmbach, Thomas, 97828 Marktheidenfeld (DE)
(74) Vertreter: Bardehle, Heinz

(56) Entgegenhaltungen:
- DE-A1- 19 738 290
- US-B1- 6 499 588

## Beschreibung

Die Erfindung betrifft eine Stützvorrichtung einer Transportvorrichtung einer Lötanlage zur Förderung von Leiterplatten gemäß dem Oberbegriff des Anspruchs 1. Ein derartige Stützvorrichtung ist bereits aus DE-A-197 38 290 bekannt.

Generell besteht bei Stützvorrichtungen von Transportvorrichtungen in Lötanlagen, welche Leiterplatten fördern, eine hohe thermische Belastung zumindest im Transportbereich. So sind im Transportbereich durchaus Temperaturen bis zu 300° C oder darüber üblich. Diese hohen Temperaturen führen zu materialbedingten thermischen Ausdehnungen der Elemente der Stützvorrichtung der Transportvorrichtung. Diese thermischen Ausdehnungen, welche für die unterschiedlichen Elemente der Stützvorrichtung der Transportvorrichtung je nach deren Masse, Geometrie und verwendetem Material unterschiedlich sind, werden gemäß dem Stand der Technik durch entsprechende Verstelleinrichtungen bzw. Abstützungen aufgenommen bzw. kompensiert, wobei dies gemäß dem Stand der Technik einen hohen baulichen Aufwand erfordert. Dieser hohe bauliche Aufwand ist jedoch erforderlich, um unter allen Betriebszuständen, also auch bei abschnittsweise wechselnden Temperaturen im Bereich des Transportbereichs immer einen zuverlässigen Transport der Leiterplatten zu gewährleisten. Insbesondere ist es im Stand der Technik erforderlich, die Führungsschienen, in welchen die endlosen Transportketten im Transportbereich laufen, möglichst als einzeln gelagerte Schienensegmente auszuführen, welche auch bei thermischer Ausdehnung durch entsprechende Einstellbarkeit der Lagerung und die Anordnung von Dehnfugen zwischen den Segmenten fluchtend zueinander ausgerichtet sein sollen, wobei eine vertikale und horizontale Durchbiegung der Schienensegmente vermieden werden soll. Jedoch selbst durch diesen hohen konstruktiven Aufwand einer einstellbaren Einzellagerung von Schienensegmenten kann nicht immer eine vollkommen zuverlässige Führung, insbesondere bei abschnittsweise wechselnden Temperaturbereichen entlang des Transportbereichs, sichergestellt werden, da die erforderlichen Toleranzen, insbesondere der Dehnfugen, dabei leicht überschritten werden.

Es ist somit die Aufgabe der vorliegenden Erfindung, eine Stützvorrichtung einer Transportvorrichtung einer Lötanlage vorzusehen, welche die Nachteile des Standes der Technik überwindet und insbesondere eine von thermischen Ausdehnungen im Transportbereich unabhängige zuverlässige Führung bzw. einen davon unabhängigen Transport der Leiterplatten bietet, wobei die verwendete Konstruktion möglichst einfach und kostengünstig sein soll.

Diese Aufgabe wird erfindungsgemäß mit einer Stützvorrichtung einer Transportvorrichtung einer Lötanlage mit den Merkmalen gemäß Anspruch 1 gelöst.

Weitere bevorzugte Ausführungsformen sind in den Unteransprüchen definiert.

Die erfindungsgemäße Stützvorrichtung einer Transportvorrichtung einer Lötanlage zur Förderung von Leiterplatten weist mindestens zwei umlaufende, endlose Transportketten auf, die im Transportbereich in Führungsschienen laufen und die an den Enden des Transportbereichs jeweils zwei Führungselemente durchlaufen, wobei zur jeweiligen Anpassung an die Breite der Leiterplatten die Führungselemente an einem Träger, bevorzugt an einem Rahmen der Transportvorrichtung, quer zur Förderrichtung verschiebbar befestigt sind. Erfindungsgemäß sind die jeweils einer Förderkette zugeordneten Führungselemente an den jeweiligen Enden des Transportbereichs über hinsichtlich ihrer Zugspannung einstellbare, im Transportbereich parallel zur jeweiligen Förderkette verlaufende, nachgiebige Zugelemente miteinander verbunden, wobei die Größe der Zugspannung so hoch eingestellt ist, dass die Zugelemente sich wie nicht durchbiegbare, gerade Balken verhalten und somit ein Ausweichen der Führungsschienen von der Geraden verhindern. Die Größe der Zugspannung, welche auf die Zugelemente ausgeübt wird, ist also so groß, dass diese Zugelemente ein Ausweichen der Führungsschienen selbst bei abschnittsweise wechselnden und hohen Temperaturen verhindern. Dabei verlaufen die Zugelemente erfindungsgemäß immer parallel zu der jeweiligen, zugeordneten Förderkette, so dass die in der jeweiligen Führungsschiene laufende Förderkette in jedem Fall im Transportbereich geradlinig verläuft, so dass ein zuverlässiger Transport der Leiterplatten gewährleistet ist. Die Führungsschienen können somit erfindungsgemäß weder in vertikaler noch in horizontaler Richtung aufgrund ihrer thermischen Ausdehnungskoeffizienten durchbiegen.

Die Größe der Zugspannung kann gemäß einer bevorzugten Ausführungsform der Erfindung in der Größenordnung von 1,5 t liegen, bevorzugt kann die Größe der Zugspannung bis zu 6 t betragen.

Gemäß einer bevorzugten Ausführungsform der erfindungsgemäßen Stützvorrichtung trägt das jeweilige Zugelement die jeweilige Führungsschiene, wobei besonders bevorzugt die jeweilige Führungsschiene mit einer Nut versehen ist, in welcher das jeweilige Zugelement läuft, so dass die Führungsschiene auf dem jeweiligen Zugelement mit der Nut auf dem Zugelement laufend geführt wird. Dabei kann besonders bevorzugt die Führungsschiene sich bei thermischer Ausdehnung auf dem Zugelement relativ dazu bewegen.

Bevorzugt weist jedes der Zugelemente einen Spanndraht auf und der jeweilige Spanndraht des jeweiligen Zugelements ist zumindest im Bereich eines der Enden des Transportbereichs jeweils über zumindest ein einstellbares Federelement unter Zugspannung gesetzt. Besonders bevorzugt weist das jeweilige Federelement eine Spannfeder und eine Spannschraube bzw. Spannelement auf, über welche(s) die Zugspannung, welche auf den jeweiligen Spanndraht wirkt, einstellbar ist.

Bevorzugt liegt das einstellbare Federelement, welches besonders bevorzugt aus der Spannfeder und der Spannschraube besteht, in einem Bereich der Stützvorrichtung außerhalb des eigentlichen Transportbereichs, so dass insbesondere dort auch keine thermischen Belastungen mit hohen Temperaturen und entsprechenden Materialausdehnungen auftreten.

Besonders bevorzugt ist eine Ausführungsform der erfindungsgemäßen Stützvorrichtung, bei welcher der Spanndraht jedes der Zugelemente zumindest im Bereich eines der Enden des Transportbereichs über eine Umlenkeinrichtung der zugeordneten Führungselemente nach untern umgelenkt ist, wobei die Umlenkeinrichtung aus einer drehbar gelagerten Kreissegmentscheibe oder Kreisscheibe besteht. Auf diese Weise kann bei Veränderung der Zugspannung eine Reibung im Bereich der Umlenkeinrichtung vermieden werden. Generell dient die Umlenkeinrichtung dazu, die einstellbaren Federelemente in einen Bereich der Stützvorrichtung zu verlagern, wo sie nicht im Weg liegt und den Transport der Leiterplatten nicht behindert.

Gemäß einer bevorzugten Ausführungsform der erfindungsgemäßen Stützvorrichtung können die Führungsschienen einstückig ausgebildet sein, da erfindungsgemäß ja ein Ausweichen der Führungsschienen von der Geraden verhindert wird, so dass die Aufteilung der Führungsschienen in viele Segmente, welche aufwendig zueinander ausgerichtet werden müssen, wie dies gemäß dem Stand der Technik erforderlich ist, erfindungsgemäß entfallen kann. Dies erhöht die Einfachheit der erfindungsgemäßen Stützvorrichtung in besonderer Weise.

Die Erfindung wird im Folgenden anhand einer bevorzugten Ausführungsform beispielhaft unter Bezug auf die beigefügte Zeichnung beschrieben werden, wobei
- Figur 1: eine perspektivische Ansicht einer Stützvorrichtung gemäß einer Ausführungsform der vorliegenden Erfindung ist; und
- Figur 2: eine schematische vergrößerte perspektivische und teilweise entlang der Linie A - A der Figur 1 geschnittene Ansicht eines Ausschnitts der Stützvorrichtung der Figur 1 ist.

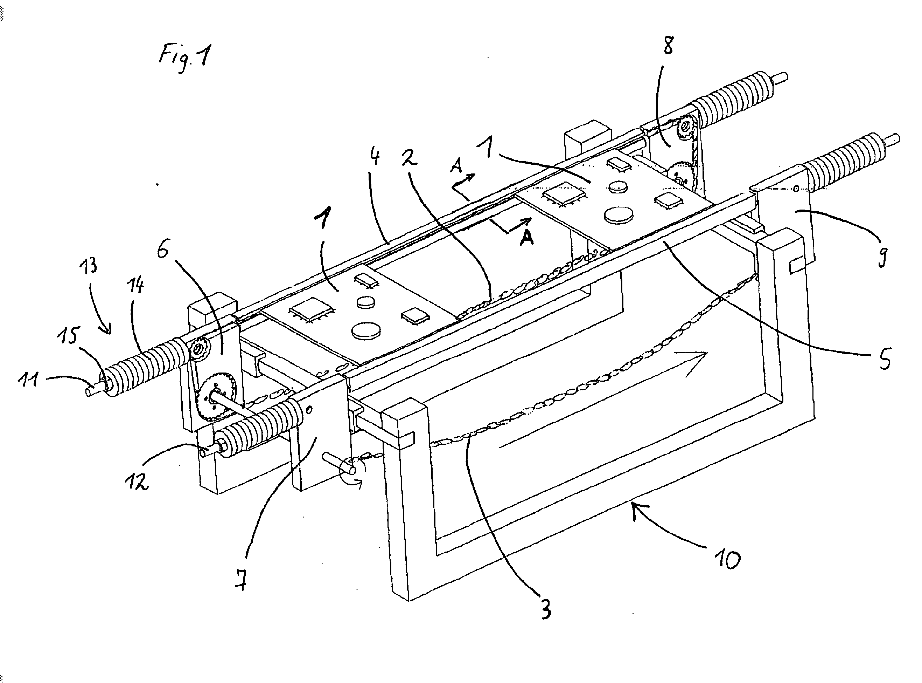

Figur 1 zeigt in einer schematischen perspektivischen Ansicht eine bevorzugte Ausführungsform einer erfindungsgemäßen Stützvorrichtung einer Transportvorrichtung einer Lötanlage zur Förderung von Leiterplatten 1. Die Stützvorrichtung weist zwei umlaufende, endlose Transportketten 2, 3 auf, die im oberen Bereich der erfindungsgemäßen Stützvorrichtung, d.h. im Transportbereich der erfindungsgemäßen Stützvorrichtung, in Führungsschienen 4, 5 laufen und die an den Enden des Transportbereichs jeweils zwei Führungselemente 6, 7 und 8, 9 durchlaufen. Eine Anpassung an die Breite der Leiterplatten 1 ist möglich, wobei die Führungselemente 6, 7 und 8, 9 an einem Träger 10, welcher als Rahmen mit zwei U-Trägern und zwei Längsträgern ausgebildet ist, quer zur Förderrichtung verschiebbar befestigt sind. Erfindungsgemäß sind die Führungselemente 6, 7 und 8, 9, welche jeweils einer der Förderketten 2, 3 zugeordnet sind, über nachgiebige Zugelemente 11, 12 miteinander verbunden, welche hinsichtlich ihrer Zugspannung einstellbar sind und im Transportbereich parallel zu der jeweiligen Förderkette 2, 3 verlaufen. Erfindungsgemäß ist die Größe der jeweiligen Zugspannung so hoch eingestellt, dass die Zugelemente 11, 12 ein Ausweichen der Führungsschienen 4, 5 von der Geraden verhindern, wenn beispielsweise durch hohe Temperaturen im Transportbereich thermische Ausdehnungen der Leiterplatten, der Führungsschienen, der Transportketten oder Teilen der Stützvorrichtung 10 auftreten sollten.

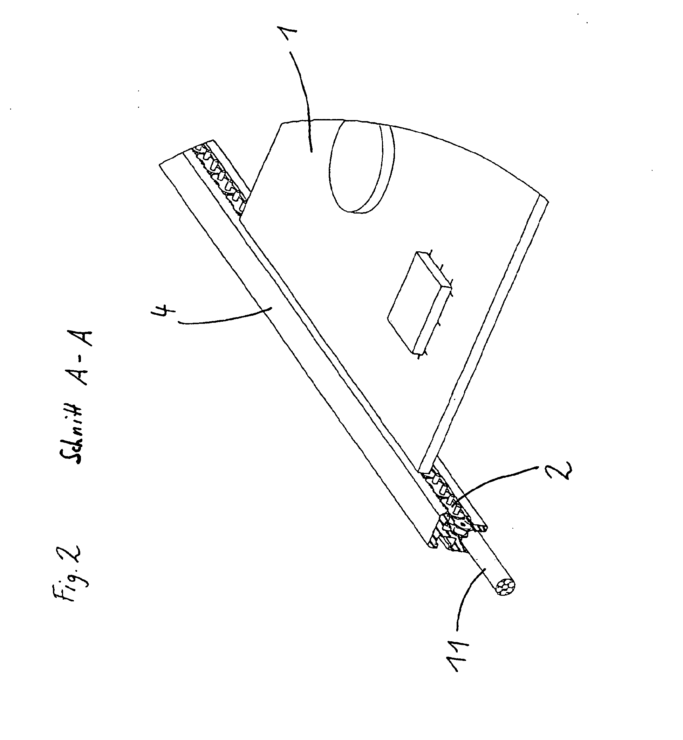

Figur 2 zeigt eine vergrößerte perspektivische, teilweise entlang der Linie A - A in Figur 1 geschnittene Ansicht eines Teils der erfindungsgemäßen Stützvorrichtung der Figur 1.

In Figur 2 ist besonders gut die Führungsschiene 4 zu erkennen, in welcher die endlose Transportkette 2 im Transportbereich geführt ist. Die Führung erfolgt dabei gemäß der in Figur 2 gezeigten Ausführungsform in einem T-förmigen Abschnitt der Führungsschiene 4, welche sich hier einstückig über die gesamte Länge des Transportbereichs erstreckt. Auf den verlängerten Kettenösen der Transportkette 2 liegt die zu transportierende Leiterplatte 1 auf. Dies ist aus dem Stand der Technik allgemein bekannt und wird hier, ebenso wie die allgemeine Gestaltung der Transportkette 2, nicht näher erläutert werden, da dies dem Fachmann geläufig ist. Erfindungsgemäß ist das nachgiebige Zugelement 11 so unter Zugspannung gesetzt, dass die Größe der Zugspannung ein Ausweichen der Führungsschiene 4 von der Geraden verhindert. Das Zugelement 11, welches hier als Spanndraht ausgeführt ist, trägt die Führungsschiene 4, wobei die Führungsschiene 4 eine U-förmige Nut an ihrer Unterseite aufweist, mit welcher sie auf dem Spanndraht des Zugelements 11 aufliegt.

Nochmals bezüglich Figur 1, weist jedes der Zugelemente 11, 12 einen Spanndraht auf und an jedem der Enden des Transportbereichs ist ein einstellbares Federelement 13 vorgesehen, welches das Zugelement 11 bzw. den Spanndraht des Zugelements 11, 12 unter Zugspannung setzt. Das Federelement 13 weist eine Spannfeder 14 und eine Spannschraube 15 auf, wobei durch geeignete Auswahl der Federcharakteristik der Spannfeder 14 und durch Verstellung der Spannschraube 15 die Größe der Zugspannung, welche auf das jeweilige Zugelement 11, 12 wirkt, einstellbar ist.

Wenn die sich aus der Stützvorrichtung der Transportvorrichtung nach außen erstreckenden Spannfedern 14 aus räumlichen Gründen ungünstig liegen, kann man die Zugelemente 11 und 12 nach ihrem Durchlaufen der Führungselemente 6 und 7 sowie 8 und 9 über eine bogenförmige Abstützung nach unten und in den Innenbereich der Stützvorrichtung umlenken, wo die Spannfedern dann unterhalb der Transportvorrichtung mit den Transportketten 2 und 3 angeordnet sind und in diesem Bereich räumlich nicht stören. Dabei sei noch darauf hingewiesen, dass anstelle der Spannfedern auch z.B. pneumatische Federelemente oder dergleichen verwendet werden können.

Mit der erfindungsgemäßen Stützvorrichtung können Einflüsse, welche sich aufgrund thermischer Ausdehnung einzelner Komponenten einer Stützvorrichtung ergeben, kompensiert bzw. verhindert werden, so dass unter allen Umständen ein zuverlässiger Transport von Leiterplatten im Transportbereich erfindungsgemäß gewährleistet ist. Insbesondere weisen die erfindungsgemäßen Zugelemente 11, 12 nur eine verhältnismäßig geringe Masse auf, so dass auch der thermische Ausdehnungseffekt der Zugelemente selbst nur gering ist, wobei dieser thermische Ausdehnungseffekt aufgrund der Nachgiebigkeit der Zugelemente und aufgrund der einstellbaren Größe der Zugspannung den geradlinigen Verlauf der Zugelemente und somit der Förderketten, welche in den zugeordneten Führungsschienen verlaufen, nicht negativ beeinflussen kann.

## Patentansprüche

1. Stützvorrichtung der Transportvorrichtung einer Lötanlage zur Förderung von Leiterplatten (1) mit mindestens zwei umlaufenden, endlosen Transportketten (2, 3), die im Transportbereich in Führungsschienen (4, 5) laufen und die an den Enden des Transportbereichs jeweils zwei Führungselemente (6, 7 und 8,9) durchlaufen, **dadurch gekennzeichnet, dass** zur jeweiligen Anpassung an die Breite der Leiterplatten (1) die Führungselemente (6, 7 und 8,9) an einem Träger (10) quer zur Förderrichtung verschiebbar befestigt sind, wobei die jeweils einer Förderkette (2, 3) zugeordneten Führungselemente (6, 7 und 8,9) über hinsichtlich ihrer Zugspannung einstellbare, im Transportbereich parallel zur jeweiligen Förderkette (2, 3) verlaufende, nachgiebige Zugelemente (11, 12) miteinander verbunden sind, wobei die Größe der Zugspannung so hoch eingestellt ist, dass die Zugelemente (11, 12) ein Ausweichen der Führungsschienen (4, 5) von der Geraden verhindern.

2. Stützvorrichtung gemäß Anspruch 1, **dadurch gekennzeichnet, dass** das jeweilige Zugelement (11, 12) die jeweilige Führungsschiene (4, 5) trägt.

3. Stützvorrichtung gemäß Anspruch 1 oder 2, **dadurch gekennzeichnet, dass** jedes der Zugelemente (11, 12) einen Spanndraht aufweist, und dass der jeweilige Spanndraht zumindest im Bereich eines der Enden des Transportbereichs jeweils über zumindest ein einstellbares Federelement (13) unter Zugspannung gesetzt ist.

4. Stützvorrichtung gemäß einem der vorhergehenden Ansprüche, **dadurch gekennzeichnet, dass** das Federelement (13) eine Spannfeder (14) und eine Spannschraube (15) aufweist.

5. Stützvorrichtung gemäß einem der vorhergehenden Ansprüche, **dadurch gekennzeichnet, dass** der Spanndraht jedes der Zugelemente (11, 12) zumindest im Bereich eines der Enden des Transportbereichs über eine Umlenkeinrichtung der zugeordneten Führungselemente (6, 7 und 8,9) nach unten umgelenkt ist, wobei die Umlenkeinrichtung aus einer drehbar gelagerten Kreissegmentscheibe besteht.

6. Stützvorrichtung gemäß einem der vorhergehenden Ansprüche, **dadurch gekennzeichnet, dass** die Führungsschienen (4, 5) einstückig ausgebildet sind.

## Claims

1. Supporting device of the transport device of a soldering apparatus for the conveying of printed-circuit boards (1) with at least two revolving, endless transport chains (2, 3), said transport chains (2, 3) running in guide rails (4, 5) in the transport zone and each passing through two guide elements (6, 7 and 8, 9) at the ends of the transport zone, **characterized in that that** for adaptation to the width of the respective printed-circuit boards (1), the guide elements (6, 7 and 8, 9) are mounted on a carrier (10) such as to be displaceable transverse to the conveying direction, wherein the guide elements (6, 7 and 8, 9), each associated with a respective conveying chain (2, 3), are interconnected by flexible tension elements (11, 12), said tension elements (11, 12) being adjustable with regard to their tensile stress and running parallel to the respective conveying chain (2, 3) in the transport zone, the value of the tensile stress being so highly adjusted that the tension elements (11, 12) prevent the guide rails (4, 5) from deviating from a straight line.

2. Supporting device according to claim 1, **characterized in that** the respective tension element (11, 12) carries the respective guide rail (4, 5).

3. Supporting device according to claim 1 or 2, **characterized in that** each of the tension elements (11, 12) has a tensioning wire, and **in that**, at least in the region of one of the ends of the transport zone, the respective tensioning wire is set under tensile stress by at least one adjustable spring element (13).

4. Supporting device according to any one of the preceding claims, **characterized in that** the spring element (13) has a tensioning spring (14) and a tensioning screw (15).

5. Supporting device according to any one of the preceding claims, **characterized in that**, at least in the region of one of the ends of the transport zone, the tensioning wire of each of the tension elements (11, 12) is downwardly deflected by a deflecting means of the associated guide elements (6, 7 and 8, 9), the deflecting means consisting of a rotatably mounted circularsegment disc.

6. Supporting device according to any one of the preceding claims, **characterized in that** the guide rails (4, 5) are of one-piece design.

## Revendications

1. Dispositif de support du dispositif de transport d'une installation de brasage servant à acheminer des cartes à circuit imprimé (1) au moyen d'au moins deux chaînes de transport tournant sans fin (2, 3) qui, dans la zone de transport, circulent dans des rails de guidage (4, 5) et qui, aux extrémités de la zone de transport, passent chacune par deux éléments de guidage (6, 7 et 8, 9), **caractérisé en ce que**, pour l'adaptation à la largeur respective des cartes à circuit imprimé (1), les éléments de guidage (6, 7 et 8, 9) sont fixés à un support (10) de manière déplaçable transversalement à la direction de transport, les éléments de guidage (6, 7 et 8, 9) respectivement associés à une chaîne de transport (2, 3) étant reliés entre eux par l'intermédiaire d'éléments de traction (11, 12) souples, lesquels sont réglables en termes d'effort de traction et, dans la zone de transport, s'étendent parallèlement à la chaîne de transport (2, 3) respective, l'effort de traction étant réglé à une valeur suffisamment élevée pour que les éléments de traction (11, 12) empêchent les rails de guidage (4, 5) de s'écarter de la ligne droite.

2. Dispositif de support selon la revendication 1, **caractérisé en ce que** l'élément de traction (11, 12) respectif porte le rail de guidage (4, 5) respectif.

3. Dispositif de support selon la revendication 1 ou 2, **caractérisé en ce que** chacun des éléments de traction (11, 12) comporte un fil tendeur, et **en ce que** le fil tendeur respectif est mis sous tension au moins dans la zone d'une des extrémités de la zone de transport chaque fois par l'intermédiaire d'au moins un élément élastique réglable (13).

4. Dispositif de support selon l'une des revendications précédentes, **caractérisé en ce que** l'élément élastique (13) comporte un ressort tendeur (14) et une vis de serrage (15).

5. Dispositif de support selon l'une des revendications précédentes, **caractérisé en ce que** le fil tendeur de chacun des éléments de traction (11, 12) est renvoyé vers le bas au moins au niveau d'une des extrémités de la zone de transport par l'intermédiaire d'un dispositif de renvoi des éléments de guidage (6, 7 et 8, 9) associés, le dispositif de renvoi étant constitué d'une plaque partiellement circulaire montée à rotation.

6. Dispositif de support selon l'une des revendications précédentes, **caractérisé en ce que** les rails de guidage (4, 5) sont réalisés d'un seul tenant.
